# EUROPÄISCHE PATENTSCHRIFT

(11) **EP 0 625 554 B1**
(45) Veröffentlichungstag und Bekanntmachung des Hinweises auf die Patenterteilung: **28.08.1996**
(21) Anmeldenummer: 94105219.3
(22) Anmeldetag: 02.04.1994
(51) Int. Cl.: C09D 5/08

(54) **Korrosionsschutz für Reibbeläge**
Corrosion protection of friction linings
Inhibition de la corrosion de garnitures de friction

(30) Priorität: 03.05.1993 DE 4314432
(43) Veröffentlichungstag der Anmeldung: 23.11.1994
(73) Patentinhaber: RÜTGERS PAGID AKTIENGESELLSCHAFT, 45356 Essen (DE); ECCO Gleittechnik GmbH, D-82402 Seeshaupt (DE)
(72) Erfinder: Eckert, Armin, D-45731 Waltrop (DE); Spehner, Jean-Léon, Romanswiller, F-67310 Wasselonne (FR)
(74) Vertreter: Hosbach, Hans Ulrich

(56) Entgegenhaltungen:
- EP-A- 0 056 918
- EP-A- 0 399 728
- DE-A- 3 906 450
- FR-A- 2 292 751
- GB-A- 2 190 968

## Beschreibung

Die Erfindung betrifft ein Korrosionsschutzmittel für organisch gebundene Reibbeläge und ein Verfahren, die Korrosion im Grenzbereich zwischen Reibmaterial und metallischer Belagträgerplatte zu verhindern.

Asbestfreie Reibbeläge für Kupplungen und Bremsen enthalten neben Stahlwolle und Eisenpulver häufig auch Späne oder Pulver von Kupfer, bzw. Kupferlegierungen. Innerhalb der Beläge und zusammen mit den Trägerplatten bilden sich in feuchter Umgebung galvanische Elemente, die zu lokaler Korrosion führen. Zwischen der metallischen Trägerplatte und den organisch gebundenen, nichtleitenden Reib- und Trägermassen tritt außerdem Spaltkorrosion auf. Besonders schwerwiegend ist dies bei Fahrzeugbremsen, die üblicherweise nicht gekapselt und so den Korrosionsangriffen durch Wasser und Streusalz schutzlos preisgegeben sind. Die übliche Lackierung hält den hohen Temperaturen bis etwa 700 °C nicht stand. Nach der mechanischen und thermischen Zerstörung der Lackschicht greifen die Korrosionsmedien die Belagträgerplatte an, wobei das aufgepreßte Reibmaterial unterwandert werden kann.

Durch die Volumenausdehnung mit fortschreitender Korrosion kann das Reibmaterial von der Trägerplatte abgesprengt werden. Die durch thermische Wechselbeanspruchung verursachten mechanischen Verformungen beschleunigen diesen Vorgang.

Als Korrosionsschutz werden vor allem metallische Beschichtungen vorgeschlagen, die meistens auf elektrochemischem Wege auf die Trägerplatten aufgetragen werden. So wird in der DE-A 39 06 450 vorgeschlagen, die Belagträgerplatte aus Stahlblech nach einer üblichen Reinigung in alkalischen und/oder sauren Entfettungsbädern und ggf. einer Oberflächenaufrauhung durch übliche Beizbäder elektrochemisch zu verzinken oder eine 3 bis 10 µm dicke Zinknickelschicht aufzutragen. Nach einer anschließenden Chromatierung und Härtung der Chromatierungsschicht werden die noch porösen Schichten mit einem flüssigen Kondensationsharz imprägniert. Nachdem das Kondensationsharz, vorzugsweise ein Phenolharz, getrocknet ist, wird auf der Fügeseite der Trägerplatte eine Klebeschicht aufgetragen und getrocknet, bevor das Reibmaterial heiß aufgepreßt oder aufgeklebt wird. Als Imprägnierharz wird insbesondere ein kautschukmodifiziertes Phenolharz verwendet.

Galvanisch aufgetragene Metallschichten, insbesondere aus Zink als Opferanode sind ein bekannter, wirksamer Korrosionsschutz für Stahlprodukte, also auch für Belagträgerplatten. Sie sind für Reibbeläge mit aufgenieteten Reibmaterial sehr gut geeignet. Ist das Reibmaterial jedoch heiß aufgepreßt oder auf die Trägerplatten aufgeklebt, dann wird häufig keine gute und sichere Verbindung zwischen Reibmaterial und Trägerplatte erreicht. Die Qualität der Verbindung wird durch Abscheren des Belages getestet. Dabei soll nach dem Abscherbild auf der Trägerplatte noch mindestens 90 % der Fläche mit Reibmaterial bedeckt sein. Auch bei der Verwendung einer gemäß DE-A 39 06 450 hergestellten Belagträgerplatte zeigt das Abscherbild nur sehr selten eine 90 %ige Abdeckung der Fläche mit Reibmaterial, in den meisten Fällen wurde nur eine 70 %ige Abdeckung erreicht. Ein weiterer Nachteil dieses bekannten Korrosionsschutzes ist seine aufwendige Herstellung und die Umweltbelastung durch die notwendigen Waschstufen und die Chromatierung.

Es bestand daher die Aufgabe, einen wirksamen Korrosionsschutz für Brems- und Kupplungsbeläge mit heiß aufgepreßtem oder aufgeklebtem Reibmaterial zu entwickeln, um die Korrosion zumindest auf der Fügeseite der Belagträgerplatten zu verhindern, der einfach herstellbar ist und eine gute und sichere Verbindung zwischen Trägerplatte und Reibmaterial ermöglicht.

Die Aufgabe wird durch ein Korrosionsschutzmittel gelöst, das aus einem Lack folgender Zusammensetzung besteht:
45 bis 75 Gew.-% Phenolharz
20 bis 40 Gew.-% anorganische Zinkverbindungen
0 bis 10 Gew.-% synthetische Kieselsäure und
5 bis 15 Gew.-% Kleber auf der Basis eines modifizierten Phenolharzes.

Als anorganische Zinkverbindungen werden Zinksulfid, Zinksulfat, Zinkphosphat oder/und Zinkoxid in Pulverform verwendet. Bei der Kieselsäure handelt es sich um ein mikronisiertes poröses Produkt mit einer Teilchengröße von maximal 30 µm, ggf. mit Calzium-Ionen ausgetauscht, wie es auch als nicht toxisches Pigment in Rostschutz-Grundierungen zur Anwendung kommt. Das Phenolharz des Klebers ist vorzugsweise vinylmodifiziert. Es kann aber auch nitrilmodifiziert sein.

Mit diesem Lack wird ein wirksamer Korrosionsschutz bei Reibbelägen dadurch erreicht, daß die Belagträgerplatte in üblicher Weise gereinigt und ggf. an der Oberfläche aufgerauht wird, nach dem Trocknen der Trägerplatte der Lack zumindest auf der Fügeseite der Trägerplatte aufgetragen und getrocknet wird, und anschließend in üblicher Weise das Reibmaterial heiß aufgepreßt oder aufgeklebt und gemeinsam mit dem Lack ausgehärtet wird.

Wird der Lack bereits vorher, z. B. direkt nach dem Trocknen ausgehärtet, so wird keine ausreichende Verbindung erhalten.

Der Lack dann durch Siebdruck, Spritzen, Rollen oder andere übliche Methoden auf die Fügeseite der Belagträgerplatte aufgetragen werden. Es ist aber auch möglich, die gesamte Oberfläche der Trägerplatte z. B. durch Tauchen zu beschichten. Dadurch wird die Trägerplatte allseitig gegen Korrosion geschützt. Das Reibmaterial kann aus mehreren Schichten bestehen, wie beispielsweise aus einer Reibmasse-, einer Trägermasse- und einer Klebermasseschicht.

Bei Scheibenbremsbelägen ist es üblich die pulverförmigen Reib- und Trägermassen in eine Form zu schichten, kalt vorzuverdichten und anschließend mit der kleberbeschichteten Fügeseite der Belagträgerplatte heiß zu verpressen. Anschließend kann der Bremsbelag noch thermisch nachgehärtet werden. Bei dem erfindungsgemäßen Verfahren wird die bisher übliche Belagträgerplatte nur durch eine mit einer aufgetrockneten Lackschicht gemäß Anspruch 1 versehenen Trägerplatte ersetzt. Die anderen Herstellungsschritte bleiben erhalten.

Ähnlich ist es bei der Herstellung von Trommelbremsbelägen. Das vorgefertigte Reibmaterial wird auf die kleberbeschichtete Fügeseite des Belagträgers aufgespannt und der Kleber anschließend ausgehärtet. Bei dem erfindungsgemäßen Verfahren ist zumindest die Fügeseite des Belagträgers mit einer getrockneten Lackschicht gemäß Anspruch 1 versehen.

Wichtig ist lediglich, daß das Reibmaterial, Klebeschicht und Lack gemeinsam thermisch gehärtet werden. Da das Aushärten ein Vernetzen des jeweiligen Bindemittels ist, können sich auch in den Grenzschichten durchgehende dreidimensionale Gerüste aufbauen und dadurch eine hochfeste Verbindung der einzelnen Schichten untereinander schaffen.

Die Erfindung wird am Beispiel eines Scheibenbremsbelages näher erläutert.

Die Belagträgerplatte wird nach dem Ausstanzen aus einem Stahlblech in üblicher Weise in einem alkalischen Bad entfettet, in einem sauren Bad neutralisiert und mit Wasser gespült. Die Oberfläche wird durch Elektrophorese angerauht, in einem Bad das Kaliumpermanganat und Oxalsäure enthält. Anschließend wird die Trägerplatte mit Wasser gespült und getrocknet. Sie wird dann durch Tauchlackieren mit einem Korrosionsschutzlack aus:
60 Gew.-% Phenolharz
20 Gew.-% Zinksulfid
5 Gew.-% Zinkoxid
5 Gew.-% synthetische Kieselsäure und
10 Gew.-% Kleber auf der Basis eines vinylmodifizierten Phenolharzes
beschichtet. Die Lackschicht wird 90 Minuten bei 100 °C getrocknet und ist dann klebfrei, so daß die Trägerplatte in Magazinen gestapelt werden kann. Auf der Fügeseite der Trägerplatte wird nun eine Kleberschicht auf der Basis eines vinylmodifizierten Phenolharzes aufgerollt und in üblicher Weise bis zur Klebfreiheit getrocknet.

Reibmasse wird in eine Form gefüllt und kalt vorverdichtet. Darauf wird eine Trägermasse geschichtet und ebenfalls vorverdichtet. Das so vorgeformte Reibmaterial wird bei 150 °C heiß auf die vorbehandelte Belagträgerplatte aufgepreßt. Anschließend wird der Scheibenbremsbelag bei 200 °C 5 Stunden lang im Ofen nachgehärtet. Zwanzig der so hergestellten Bremsbeläge werden zur Simulation einer mehrjährigen Belastung in der Bremse einem Kurztestprogramm unterworfen, das die Stufen a. bis i. umfaßt:
a. Prüfprogramm auf dem Prüfstand durchfahren, um die Einlaufphase zu simulieren,
b. Salzsprühtest 24 h (DIN 500 21),
c. Ofenlagerung 2 h bei 200 °C,
d. Prüfprogramm auf dem Prüfstand durchfahren als Simulation der normalen Beanspruchung,
e. Wasserlagerung des heißen Belages, um Kälteschock und Sättigung der Poren mit Wasser zu simulieren,
f. Kältelagerung 48 h bei -6°C, um die Vereisung des Belages zu simulieren,
g. Ofenlagerung 2 h bei 200 °C zur Simulation der Auswirkung der Reibungswärme auf den vereisten Belag,
h. Salzsprühtest 24 h (DIN 500 21) zur Simulation der Streusalzbelastung,
i. Beläge abscheren.

Die Stufen d. bis h. werden insgesamt fünf mal durchlaufen. Nach jedem Durchlauf werden 4 Beläge abgeschert. Dabei wird die Abscherkraft gemessen und das Abscherbild sowie der Korrosionszustand beurteilt. Die gemittelten Ergebnisse sind in der Tabelle denen mit einem entsprechenden Belag gemäß der DE-A 39 06 450 gegenübergestellt.

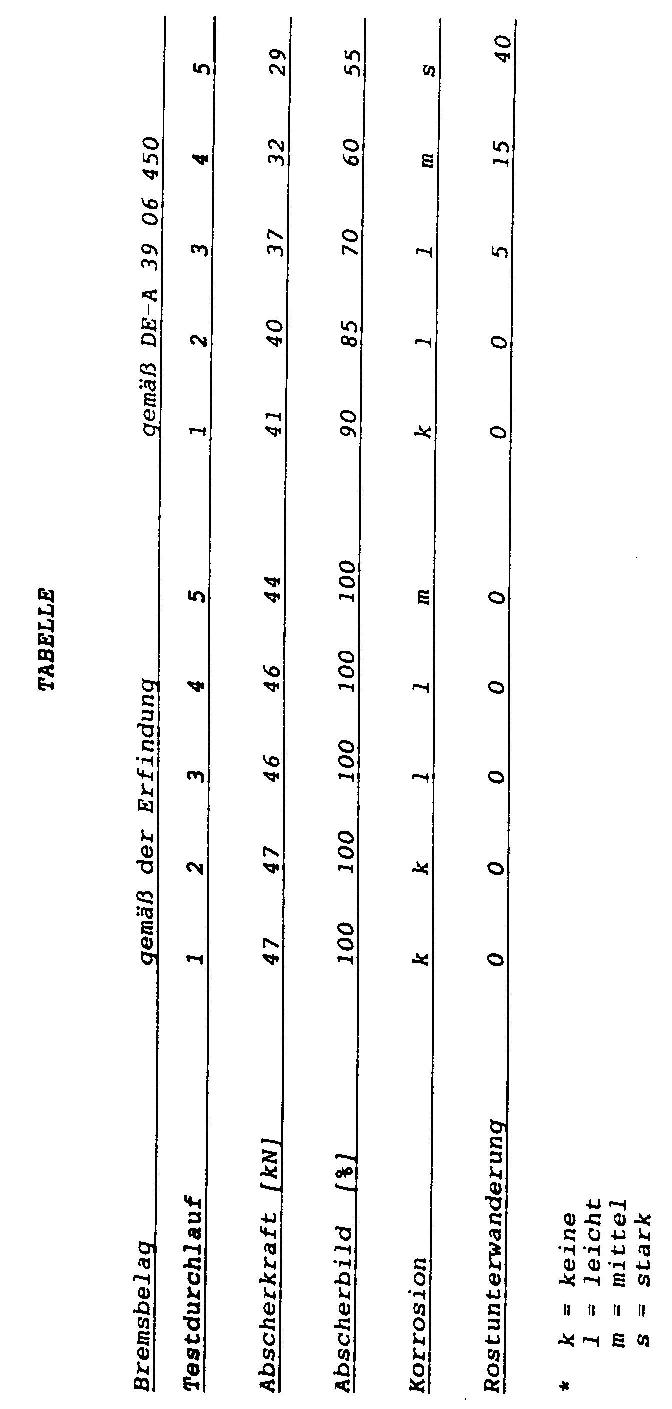

## Patentansprüche

1. Korrosionsschutzmittel für organisch gebundene Reibbeläge, **dadurch gekennzeichnet,** daß es aus einem Lack folgender Zusammensetzung besteht:
45 bis 75 Gew.-% Phenolharz
20 bis 40 Gew.-% anorganische Zinkverbindungen
0 bis 10 Gew.-% synthetische Kieselsäure und
5 bis 15 Gew.-% Kleber auf der Basis eines modifizierten Phenolharzes

2. Verfahren zum Korrosionsschutz von organisch gebundenen Reibbelägen durch Beschichten der gereinigten und ggf. an der Oberfläche aufgerauhten Belagträgerplatte mit einem Korrosionsschutzmittel, **dadurch gekennzeichnet,** daß die Belagträgerplatte mit einem Lack gemäß Anspruch 1 zumindest auf der Fügeseite beschichtet, der Lack getrocknet, das Reibmaterial in üblicher Weise heiß aufgepreßt oder aufgeklebt und gemeinsam mit dem Lack ausgehärtet wird.

3. Verfahren nach Anspruch 2, **dadurch gekennzeichnet,** daß auf den getrockneten Lack auf der Fügeseite der Belagträgerplatte eine Kleberschicht aufgetragen und getrocknet wird, bevor das Reibmaterial mit der Belagträgerplatte verbunden wird.

4. Verfahren nach Anspruch 2 oder 3, **dadurch gekennzeichnet,** daß das Reibmaterial, die Lackschicht und ggf. die Kleberschicht nach dem Zusammenpressen gemeinsam in einem Ofen nachgehärtet werden.

## Claims

1. A corrosion-protection agent for organically bonded friction linings, **characterized in that** it consists of a lacquer of the following composition:
45 to 75% by weight of phenol resin
20 to 40% by weight of inorganic zinc compounds
0 to 10% by weight of synthetic silicic acid and
5 to 15% by weight of adhesive based on a modified phenol resin.

2. A method of protecting organically bonded friction linings from corrosion by coating the cleaned lining-support plate, optionally roughened on the surface, with a corrosion-protection agent, **characterized in that** the lining-support plate is coated with a lacquer according to Claim 1 at least on the join side, the lacquer is dried, the friction material is stuck on or pressed on hot in a conventional manner and is hardened jointly with the lacquer.

3. A method according to Claim 2, **characterized in that** an adhesive layer is applied to the dried lacquer on the join side of the lining-support plate and is dried, before the friction material is bonded to the lining-support plate.

4. A method according to Claim 2 or 3, **characterized in that** the friction material, the layer of lacquer and optionally the adhesive layer are subsequently hardened jointly in a furnace after being pressed together.

## Revendications

1. Produit anticorrosion pour des garnitures de friction liées organiquement, caractérisé en ce qu'il consiste en un vernis de la composition suivante:
45 à 75% en poids de résine phénolique
20 à 40% en poids de composés de zinc inorganique
0 à 10% en poids d'acide silicique synthétique et
5 à 15% en poids de substance adhésive à base d'une résine phénolique modifiée.

2. Procédé pour la protection contre la corrosion de garnitures de friction liées organiquement par revêtement de la surface nettoyée et éventuellement de la surface de plaquette support de garniture rendue rugueuse par un produit anticorrosion, caractérisé en ce que la plaquette de support de garniture est revêtue d'un vernis selon la revendication 1 au moins sur le côté de la jonction, le vernis est séché, la matière de friction est comprimée à chaud de la manière habituelle ou collée et durcie conjointement avec le vernis.

3. Procédé selon la revendication 2, caractérisé en ce que l'on applique sur le vernis séché sur le côté de jonction de la plaquette de support de garniture une couche de matière adhésive que l'on fait sécher avant de lier la matière de friction avec la plaquette de support de garniture.

4. Procédé selon la revendication 2 ou 3, caractérisé en ce que la matière de friction, la couche de vernis et éventuellement la couche de matière adhésive sont à nouveau durcies dans un four après avoir été conjointement comprimées.
